# EUROPEAN PATENT APPLICATION

(11) **EP 4 531 028 A1**
(43) Date of publication of application: **02.04.2025**
(21) Application number: 23465545.4
(22) Date of filing: 29.09.2023
(51) Int. Cl.: G09G 3/00, G02B 27/01

(54) **METHOD FOR REDUCING OCCLUSIONS BY OBJECTS OF A VIRTUAL IMAGE OF A HEAD-UP DISPLAY, COMPUTER PROGRAM CODE AND APPARATUS THEREFOR**

(71) Applicant: Continental Automotive Technologies GmbH, 30175 Hannover (DE)
(72) Inventor: Pasca, Andrei, 60488 Frankfurt am Main (DE)
(74) Representative: Continental Corporation

(57) **Abstract**

The invention is directed to a method for reducing occlusions by objects of a virtual image of a head-up display, a computer program code and an apparatus therefor. The method comprises:
- Dividing an image (BD,BA) to be displayed in multiple zones (70,71,72,73), wherein these zones (70,71,72,73)
- have rectangular shape,
- are arranged in rows (Rn) and columns (700,700-n), and
wherein a centre row of said rows (Rn) substantially coincides with a horizontal reference line (642);
- Detecting (S4) a fraction (FC) of each zone (70,71,72,73) that is covered by objects (63) of the image (BD,BA) to be displayed;
- Warning (S5) by generating and outputting of a warning signal () in case that at least for one of said zones (70,71,72,73) the detected fraction (FC) exceeds a threshold (THR(n));
- preceding the Dividing performing Warping (S1) the image (BD,BA) to be displayed; and
the Dividing comprising
-Vertical Dividing (S2) the image (BD,BA) to be displayed into columns (700,700-n), and
- Adapting (S3) each column (700,700-n) of zones (70,71,72,73) such that the zone (72) of the respective centre row of each column (700,700-n) substantially coincides with a horizontal centre line (647) of the warped image (WB) to be displayed.

## Description

The present invention is directed to a method for reducing occlusions by objects of a virtual image of a head-up display, a computer program code therefor and a respective apparatus.

From WO 2023/030593 A1 a method for reducing occlusions by objects of a virtual image of a head-up display of a vehicle is known that comprises: Dividing an image to be displayed in multiple zones, wherein these zones have rectangular shape, are arranged in rows and columns, and wherein a centre row of said rows substantially coincides with a horizontal reference line. Detecting a fraction of each zone that is covered by objects of the image to be displayed. Warning by generating and outputting of a warning signal in case that at least for one of said zones the detected fraction exceeds a threshold. A disadvantage of this method is that it no longer works reliably if the dividing is performed following a pre-distortion, also called warping, of the image to be displayed. Such pre-distortion or warping is intentionally performed and desired in order to compensate for a distortion effect caused by optical properties of downstream components of the head-up display. In improved method is desired.

According to the invention warping the image to be displayed is performed preceding the dividing. Further, the dividing comprises vertically dividing the image to be displayed into columns, and adapting each column of zones such that the zone of the respective centre row of each column substantially coincides with a horizontal centre line of the warped image to be displayed. Usually, the respective centre row lies in the horizontal centre of the image. But it may also be shifted upwards or downwards therefrom so that it substantially coincides with the horizon of the real world outside the vehicle to which the image to be displayed by the head-up display is to be overlaid. The centre row coincides with a horizontal centre line of the warped image if the horizontal centre line, which itself usually is not a straight line due to the warping of the warped image, if this horizontal centre line completely falls within the centre row or at least a major part of it falls within the centre row. An advantage of the invention is that the dividing, the detecting and the warning can remain unchanged, even if a warping or pre-distortion of the image on which these are applied precedes these. This provides more flexibility when designing or updating a head-up display signal processing.

Advantageously adapting comprises adjusting the height of a column such that the upper border of said column coincides with the uppermost border part of the warped image falling in said column, and such that the lower border of said column coincides with the lowermost border part of the warped image falling in said column. This has the advantage that the complete warped image is covered by the zones even if some zones at the borders fall partly outside the warped image. The area falling outside the warped image are small and easy to determine. Complex calculations that would be necessary to reduce the area falling outside the warped image are avoided. Thus a waste of computing capacity is avoided.

Advantageously adapting comprises scaling the height of the rows of a column. This has the advantage that the size of the area of the warped image covered by zones is not much different from the respective size for a not warped image. Thus the same or a similar evaluation algorithm can be used without the need to design an especially adapted evaluation algorithm.

Preferably scaling comprises using different scaling factors for different rows of a column. By this it is made possible that zones closer to the horizontal reference line get a smaller height than zones closer to the upper or lower border. Thus, occlusions in the zones closer to the horizon get a higher attendance. This is desired as occlusions around the horizon have a larger impact than occlusions further distant from the horizon.

Preferably warning comprises applying zone specific thresholds or applying row specific thresholds or applying thresholds that are specific for groups of rows. Using zone specific thresholds requires large memory capacity for storing a large number of thresholds but has the advantage that it allows for optimum and independent adaptation of the threshold for each zone. Using row specific thresholds has the advantage that it requires less memory capacity but still allows for a good adaptation for all rows of a column. Groups of rows are for example a first group of rows in a centre area including rows located at and close to the horizon, a second group of rows located above the centre area and a third group of rows located below the centre area. This has the advantage that even less memory capacity is required but still a good adaptation is possible for the centre area in which the horizon usually happens to be located.

A computer program code according to the invention comprises instructions, which, when executed by at least one processor, cause the at least one processor to perform a method for reducing occlusions by objects of a virtual image of a head-up display of a vehicle according to a method according to the invention.

An apparatus for reducing occlusions by objects of a virtual image of a head-up display of a vehicle is indicated in the apparatus claim. Advantages and possible further improvements are similar to those indicated above with regard to the method claims.

Further features of the present invention will become apparent from the following description and the appended claims in conjunction with the figures.

Overview of the figures:
- Fig. 1: schematically shows a head-up display with a display apparatus according to the invention;
- Fig.2: shows an exemplary view of outside objects as seen by a user of a head-up display
- Fig.3: shows an exemplary view of virtual objects generated by a head-up display
- Fig.4: shows an exemplary view of outside objects overlaid by virtual objects as seen by a user of a head-up display
- Fig.5: shows an exemplary view of a real world scene;
- Fig.6: shows an exemplary approach for occlusion detection;
- Fig.7: shows an exemplary image generation, processing and transmission chain;
- Fig.8: shows an exemplary undistorted image drawn on a display panel;
- Fig.9: shows an exemplary pre-distorted image drawn on a display panel;
- Fig. 10: shows an exemplary image generation, processing and transmission chain;
- Fig. 11: shows an exemplary approach for occlusion detection on a pre-distorted image;
- Fig. 12: depicts an approach for occlusion detection according to the invention;
- Fig. 13: depicts an embodiment of the present invention;
- Fig. 14: depicts another embodiment of the present invention;
- Fig.15: depicts another embodiment of the present invention;
- Fig. 16: depicts an apparatus according to the invention
- Fig. 17: depicts a method according to the invention.

For a better understanding of the principles of the present invention, embodiments of the invention will be explained in more detail below with reference to the figures. The same reference signs will be used in the figures for identical or functionally identical elements and are not necessarily described again for each figure. It is to be understood that the invention is not restricted to the illustrated embodiments and that the features described can also be combined or modified without departing from the scope of protection of the invention as defined in the appended claims.

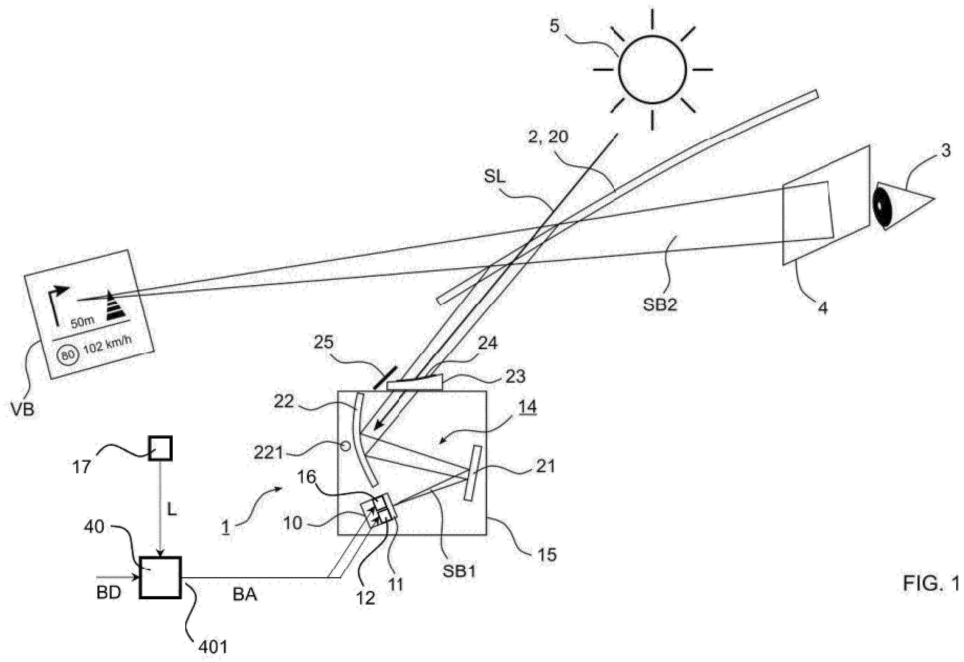

Fig. 1 schematically shows a head-up display with a display apparatus according to the invention. The head-up display has a display apparatus 1 with a picture generating unit 10 and an optical unit 14. A beam SB1 emanates from a display panel 11 and is reflected by a folding mirror 21 onto a curved mirror 22 that reflects it in the direction of a mirror unit 2. The mirror unit 2 is illustrated here as a windshield 20 of the motor vehicle. From there, the beam SB2 travels in the direction of an eye of a user 3.

The user 3 sees a virtual image VB that is located outside the motor vehicle above the engine hood or even in front of the motor vehicle. Due to the interaction of the optical unit 14 and the mirror unit 2, the virtual image VB is an enlarged representation of the image displayed by the display panel 11. A speed limit, the current vehicle speed, and navigation instructions are symbolically represented here. As long as the eye of the user 3 is located within an eyebox 4, indicated by a rectangle, all elements of the virtual image VB are visible to the user 3. If the eye of the user 3 is outside the eyebox 4, the virtual image VB is only partially visible to the user 3 or not at all. The larger the eyebox 4 is, the less restricted the user is when choosing their seating position.

The curvature of the curved mirror 22 is adapted to the curvature of the windshield 20 and ensures that the image distortion is stable over the entire eyebox 4. The curved mirror 22 is rotatably mounted by means of a bearing 221. The rotation of the curved mirror 22 that is made possible thereby makes it possible to displace the eyebox 4 and thus to adapt the position of the eyebox 4 to the position of the user 3. The folding mirror 21 serves to ensure that the path travelled by the beam SB1 between the display panel 11 and the curved mirror 22 is long and, at the same time, that the optical unit 14 is nevertheless compact. The picture generating unit 10 and the optical unit 14 are delimited with respect to the environment by a housing 15 having a transparent cover 23. The optical elements of the optical unit 14 are thus protected for example against dust located in the interior of the vehicle. An optical film or a polarizer 24 is furthermore located on the cover 23. The display panel 11 is typically polarized, and the mirror unit 2 acts like an analyser. The purpose of the polarizer 24 is therefore to influence the polarization in order to achieve uniform visibility of the useful light. An anti-glare protection 25 serves to reliably absorb the light reflected via the interface of the cover 23 so that the user is not dazzled. In addition to the sunlight SL, the light from another stray light source 5 may also reach the display panel 11. In combination with a polarization filter, the polarizer 24 can additionally also be used to reduce incident sunlight SL.

Further dazzling of the user may occur if the virtual image VB generated by the display panel 11 is much brighter than the ambient brightness. In that case, the eye of the user has adjusted to a low brightness and is dazzled by the virtual image VB if the latter has not been adapted. For this purpose, a light sensor 17 is provided, which captures the ambient brightness and supplies a corresponding signal to the image control unit 40. The latter then adapts the brightness values of the image points of an image BD to be represented and outputs an adapted image signal BA at its image signal output 401. Said image signal BA is supplied to a driver 12 controlling the display panel 11. In addition, the image signal BA is supplied to an occlusion detection module 16. The latter monitors whether objects of the image to be displays covers a too large area and initiates a suitable reaction. In the simplest case, this reaction consists of switching off the display panel 11 so that it does not emit light, no matter what image signal BA is present. In that case, a malfunction of the light sensor 17 or of the image control unit and any occurring changes in the brightness value of the image points of the image signal BA on signal transmission paths do not result in the user being dazzled. The image control unit usually is part of an image generator.

A Head-up Display, also referred to as HUD in the following, is used to place information in the field of view of the user 3 in such a way as to appear integrated in the surrounding environment. The intention is to provide the information in a way that does not require the user to significantly change the eye gaze direction and / or focus distance.

HUDs are of particular importance in avionics and the automotive fields where they allow the vehicle's operator to glance important aspects of the trip without taking the eyes away from the path ahead. For this purpose, state of the art HUDs are required to deliver this information clearly discernible, independent of the ambient light level. This translates in high brightness requirements for the virtual image VB produced by the HUD.

At the same time, very bright images generated by the HUD may pose particular risks for the safety of the vehicle as they may cover critical objects from the field of view of the user 3.

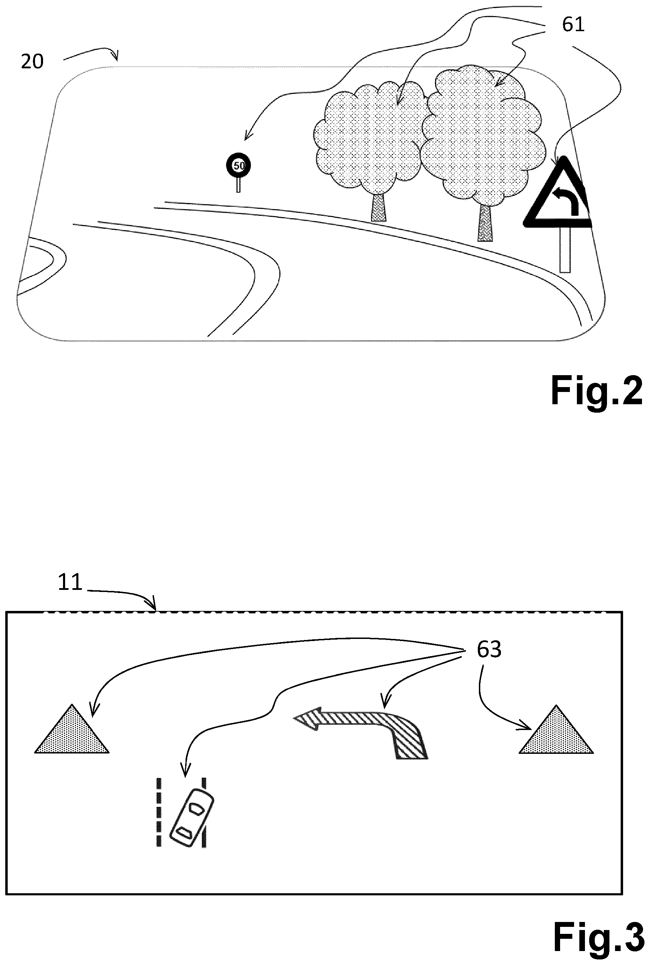

As seen in Fig.2, a driver of an automotive vehicle, the user 3, should have an unobstructed view of real world objects 61 in front of the vehicle - e.g. road signs, obstacles, the path to follow.

Over this field of view, the HUD system overlays some virtual objects 63 generated by an image generating unit, like those shown in Fig.3. These virtual objects 63 may provide useful information to the driver, for instance the direction to follow given by a navigation system or warnings such as the car is about to cross the lane boundary, or some cosmetic image features to align the appearance of the generated images with the general design philosophy followed by the designers.

Fig.3 depicts conceptually a possible HUD image as seen on the display panel 11 used for the construction of the system. It should be clear to anyone skilled in the art that the previous image is only a simplification used for illustration purposes, ignoring details that are unessential for the present invention.

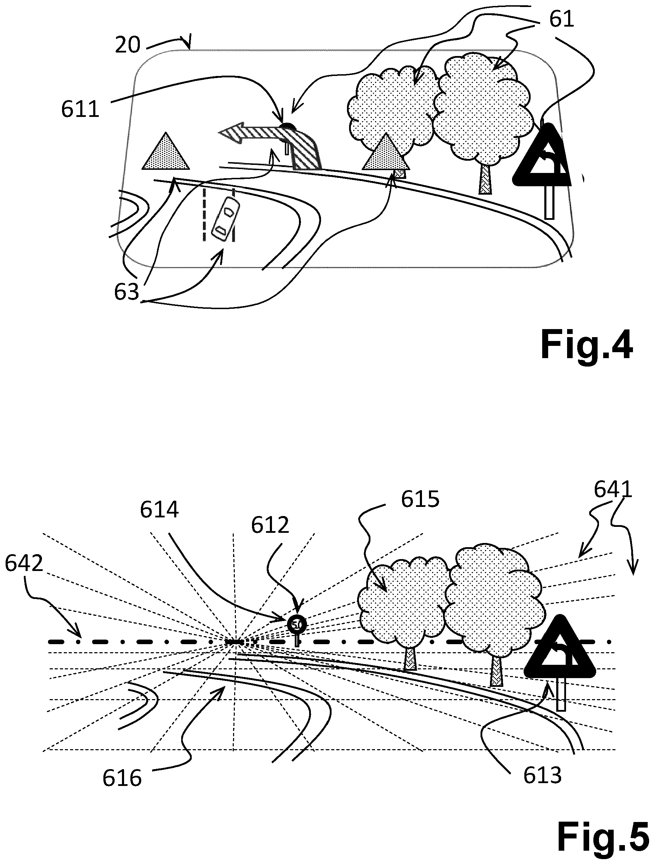

When the Head-up Display system is switched in the operating mode, the images that are shown on the display panel 11 will be overlayed on the real world and presented to the user 3 as virtual objects 63 hovering at a certain distance in front of the vehicle, as seen in Fig.4.

An important aspect that can be retained from Fig.3 is that some objects 63 generated by the HUD system can overlap critical objects 611 from the real world, like the speed limit indicator from the previous figures. For the situation depicted in Fig.3, the navigation arrow indicating a left turn, from the user's 3 perspective, occludes a critical object 611 from the scene existing in front of the vehicle.

For safety reasons, situations like this need to be avoided in the operation of the HUD system. However, it should be noted that not all occlusions are posing the same risks. An important factor that must be taken into consideration is given by the position of the occluded objects in the field of view. As depicted in Fig.5, illustrating schematically a real-world scene onto which perspective lines 641 are drawn for visual guidance. Objects 613 that are close the vehicle (i.e. in the foreground) appear larger than objects 614 which are further away (i.e. in the background). For this reason, the left turn indicator shown in Fig.5 has a larger dimension than the speed limit indicator from the background.

Because of this, if a HUD generated virtual object 63 occludes a foreground object 613, the risk for the safety of the vehicle is reduced as only a minor fraction of the real-world object 613 is obscured and the user 3 my still easily recognize the real object 613 and act accordingly to its significance (e.g., just some examples, prepare for a left turn as depicted in the figure, prepare to act on the brake system if a pedestrian is engaging in a street crossing).

Another important factor that must be taken into consideration is the position of the real-world object 61 in relation to the horizon 642. Objects 615 appearing above the horizon 642 typically don't pose an immediate risk for the vehicle as they are typically tall enough to pass over the vehicle without a physical contact. Because of this, the requirements for the occlusion detection module 16 covering the regions above the horizon 642 are more relaxed.

Objects 616 appearing below the horizon 642 may pose a risk (like collision) to the vehicle. However, for real world scenes, objects that are below the horizon 642 are, by definition, closer to the vehicle. In fact, the lower the object 616 relative to the horizon 642, the closer the object to the vehicle.

As seen in the perspective image of Fig.5, objects 613 closer to the vehicle appear larger to the user 3 so occluding objects generated by the HUD system are less likely to obscure the entire object 613 such as to render it invisible or unrecognizable to the user 3.

Finally, objects 612 that are close to the horizon 642 can pose a risk if they are obscured, especially if they are in the background of the real-word scene. For instance, road signs by the side of the road, appearing in the distance, are seen as smaller and close to the horizon 642. Other examples of critical objects can be a concrete barrier blocking the lane in the distance, or the backside of a stationary vehicle in a traffic jam. Considering the full stop braking distance from highway speeds and the user's 3 reaction times, it is essential for the user 3 to see these kinds of objects as far away as possible. However, if the objects are far away, they appear smaller to user 3 and hence, the images generated by the HUD system can easily obscure them.

For this reason, special attention must be given by the occlusion detection module 16 to objects in the image generated by the HUD system that appear close to the horizon 642.

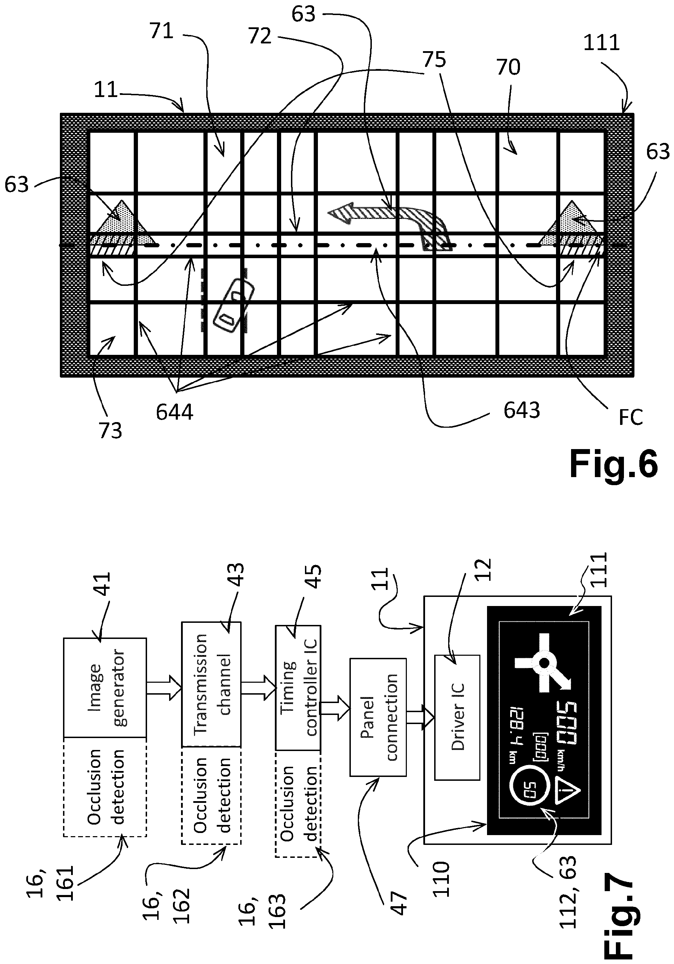

Fig.6 depicts a possible approach for the occlusion detection module 16 to take into consideration all the above topics.

The figure depicts in a simplified fashion the appearance of an image on the display panel 11 that is used inside the HUD system. As a note, typically, only a limited area of the display panel 11 is effectively used for the generation of the image that is to be shown to the user 3. The unused panel area 111 close to the border of the panel 11 is typically used for the calibration process like fine adjustment of the image position to compensate electronically the inherent mechanical alignment errors.

For ease of understanding of the occlusion detection module 16, the image that is to be displayed is covered by a grid 644 that partitions the image into several zones 70. It should be clear to anyone skilled in the art that this partitioning is only a virtual process and no lines are effectively drawn on the panel 11.

Also depicted in the figure is a display reference line 643 that ideally should coincide with the horizon 642 when the image generated by the HUD system is overlain on the real-world scene. Again, it should be clear to anyone that this line is shown only as visual aid for the description of the occlusion detection problem and not as an object that is drawn on the display panel 11.

As it can be seen, the system partitions the image in several zones 70 in a Manhattan-like fashion, with vertical and horizontal parallel lines. The depicted reference line 643 falls also into this pattern, running parallel to the grid 644 lines defining the occlusion detection zones 70.

For each individual zone 70 the occlusion detection module 16 looks for the fraction FC of the image BD that is covered by objects 63. If only a small fraction of an image zone 70 is covered by one or several objects 63 that are generated by the HUD system, then the risk is considered to be low. However, if an important fraction of the tested zone 70 is covered by objects 63 from the image, then the risk is considered high and the occlusion detection module 16 flags these zones 70 as risk zones 75. Fig.6 contains two such risk zones 75, represented with a slanted hash fill where a fraction FC close to 50% of the zone 75 area is covered by objects 63.

However, the size of the zones 70 differs based on the position of the zone 70. That is, zones 72 that are close to the horizon 642 (i.e. they appear as crossed by the reference line 643 in the figure) are typically smaller than other zones 71,73. Both zones 75 marked as with risk by the occlusion detection module 16 in the figure are zones 72 close to the horizon 642.

Zones 71 from the area of the display panel 11 that correspond to regions above the horizon 642 typically have a larger area as, already stated, they cover objects that are above the ground for which the safety risk is considered lower. In these regions, in order to trigger an occlusion error, the occluding object generated by the HUD must be larger compared to objects 63 generated close to the horizon 642. For instance, assuming a detection threshold of 30% of the zone covered by an object, it is clear that if the area of the tested zone is increased, also the area of the corresponding object must be increased in order to trigger an event.

Similarly, the zones 73 that are below the horizon 642 line also can have a larger area as they cover real-world objects that are closer to the user 3, hence, objects that appear larger to the user 3. Again, for a given fraction of the area that is covered by objects 70 in a zone, the larger the area of the zone 70, the larger the area that is covered by objects in the same zone 70 can be.

Another important aspect with respect to the occlusion detection is the position of the occlusion detection module 16 in the image generation, processing and transmission chain. Fig.7 depicts a possible configuration for the system, highlighting typical positions 161,162,163 in which the occlusion detection module 16 is located.

The left part of the image from Fig.7 depicts an image generator 41 block. This block is typically part of a graphic controller and is responsible for the creation of the image that must be presented to the user of the vehicle by the HUD system. It usually includes or is part of the image control unit 40 mentioned above.

This generated image is then transmitted towards the head-up display system via a transmission channel 43. It should be noted that this transmission channel 43 can be a passive channel (e.g. formed as traces on a printed circuit board or as wires in an automotive wiring harness) or an active transmission channel which involves the presence of additional signal processing circuitry that converts the data stream into formats more suited to be transmitted over the physical transmission layer. For instance, the transmission channel 43 may contain at the side close to the image generator 41 a device that converts the data stream from a parallel format in which several signal wires carry the information given by the image generator into a serial format in which the data stream is transported over a single coaxial cable and another device that converts back from the serial format to an appropriate format for the image receiver (that is, the display panel 11) placed at the other side of the transmission channel 43.

The data information is fed by the transmission channel 43 into a timing controller 45, in the following sometimes also referred to as TCON, device which recovers the effective image data from the data stream. The data recovered by the timing controller 45 is then sent towards the display panel 11 via the panel connection 47. On the display panel 11, the data is processed by the driver 12 integrated circuit and converted to appropriate signals to drive the pixels on the display panel 11. The display panel's 11 active area 110 includes a centre area 112 with objects 63 and is surrounded by an unused panel area 111. The objects 63 are shown upside down and inverted, as they will be reflected by the windshield 20 and then correctly appear as virtual image VB to the user 3.

As a note, the configuration shown is not the only possible configuration and it should be clear to anyone skilled in the art that departures from the depicted diagram do not represent implementations that are not according to the present invention.

For instance, the timing controller device 45 may be integrated in the same device as the driver 12 circuit, both placed on the display panel 11. Additionally, although the figure depicts the driver 12 IC as placed on the display panel, it should be noted that the word panel as used here should be understood in a broader sense. That is, the integrated circuit may be placed on a flexible printed circuit that is affixed to the display panel 11 without changing in any way the functionality of the entire system.

As seen in the figure, the occlusion detection module 16 typically is placed in one of the positions 161,162,163 depicted in the figure. In general, the occlusion detection circuitry 16 is placed inside a device that performs other operations on the image. One of the preferred positions of the state of the art is a position 161 inside the image generator 41. This is because the image generator 41 contains a graphic controller which has sufficient processing power to also perform the operations needed for occlusion detection. This implementation typically does not need additional hardware resources as the detection is implemented as a software module that operates on the graphic controller.

Another possible position 163 is inside the timing controller 45 of the head-up display system. Again, this position 163 is also seen as natural as the TCON 45 IC typically performs some form of image processing. Combined with the rest of the circuitry of the TCON 45, the additional circuitry used for the occlusion detection module 16 does not increase significantly the complexity or the circuit's area of the TCON 45 and hence, has only a small impact on the final system costs.

Finally, another typical position 162 for the occlusion detection module 16 is inside the transmission channel 43, more precisely in the devices used for an active transmission channel 43. This placement allows an easy addition of the occlusion detection module 16 in already existing products which were not designed from the beginning with this function.

For instance, the functionality is added to an already existing car line by making an update of the head-up display system only. The more complex system, that is the image generator 41 unit, remains unchanged and thus the overall costs for the implementation are optimized. At the HUD system part, typically the timing controller 45 is placed directly on the display panel 11 alongside the driver IC. If the occlusion detection function must be added inside the timing controller 45, that will mean a change of the display panel 11 itself. Typically, such changes are more expensive than a change in the rest of the system as it involves e.g. the display panel's 11 manufacturer and the TCON's 45 producer. For this reason, placing the occlusion detection module 16 inside the transmission channel 43 appears as a cost effective solution for already existing platforms that must be updated.

Of course, for real systems it is perfectly possible that several timing controllers 45 exist in the same time or that the occlusion detection module 16 is present in more than one position 161,162,163 but it should be clear to anyone skilled in the art that such combinations do not represent a departure from the scope of the present invention.

Another important aspect which was not highlighted up to this point is the quality of the optical system with respect to image distortions. All illustrations showing the HUD image as generated on the display panel 11 assumed an ideal optical path from the surface of the display panel 11 up to the end-user's 3 eyes. In reality, all systems introduce some optical distortions, converting, for instance, straight lines generated on the display panel 11 into curved lines in the virtual image VB, or parallel lines into angled lines.

These distortions affect the way the image BD,BA must be generated by the HUD system such that the end-user 3 sees an undistorted image VB. In general, by drawing on the display panel 11 an image that is pre-distorted in the opposite direction, the combination of this pre-distorted image with the transfer function of the optical path can result is correct images for the end-user 3.

The following figures illustrate this concept applied to the image shown on the display panel 11 of the HUD system.

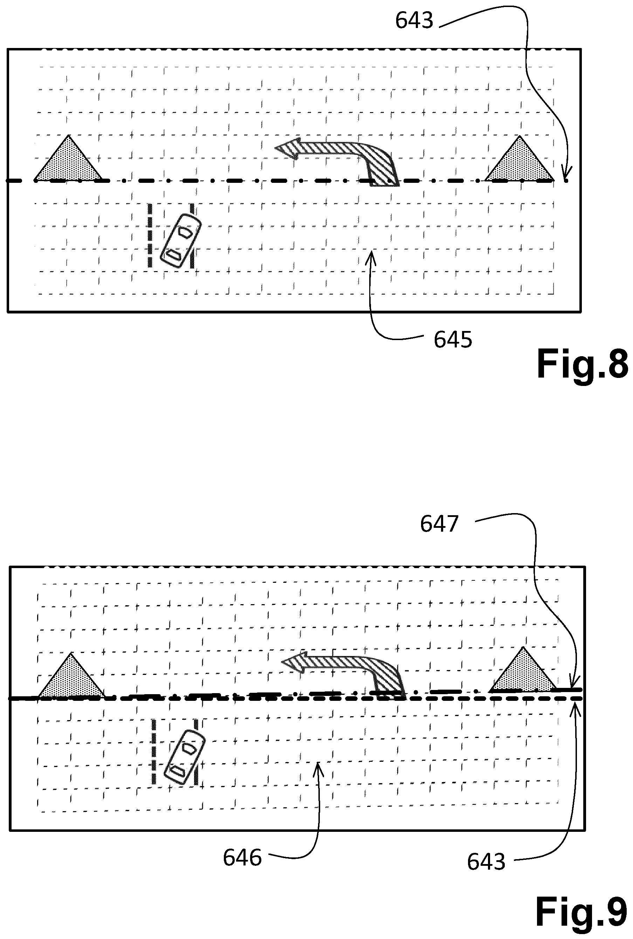

Fig.8 shows an undistorted image drawn on the display panel 11. In order to provide a visual aid for the understanding of the problem, a dashed reference grid 645 was overlaid on the image but it should be clear to anyone skilled in the art that this grid 645 is not shown in reality in the virtual image VB shown by the HUD system.

Since the image shown is undistorted, the reference line chosen on the display panel 11 according to the previous descriptions, still coincides with the horizon 642 as seen by the end user 3.

Fig.9 shows the pre-distorted image drawn on the display panel 11. By comparing the reference grid 645,646 lines of the two figures it can be seen that the pre-distorted image is slightly deformed, having a small vertical size compression (2% size reduction in the illustration) on its right side and also a small shearing in the upwards direction close to the same right image edge (2% of the vertical image size upwards translation of the top-right corner in the illustration).

For this case, the original reference line 643 chosen on the display panel will no longer overlap with the horizon as seen by the end user 3. In reality, because of the optical transfer function of the HUD system, the end user 3 sees the marked horizon line 647 from the figure as being a true horizontal, coinciding with the correct horizon 642 and the reference line 643 from the display panel would be seen as slightly curving downwards, falling more and more below the horizon 642.

The exact transfer function of the optical path depends not only on the designed geometries for the optical surfaces, but also on the assembly tolerances. This effectively means that any individual HUD system will have its own optical transfer function and hence, its own distortions. Because of this, it is not generally feasible to generate by the graphic software in the image generator 41 directly the pre-distorted image. The standard way of implementing the optical distortions is to generate a standard image in the image generator 41 and then, at a later stage, to introduce the pre-distortions in the image with the aid of an image warping engine 18.

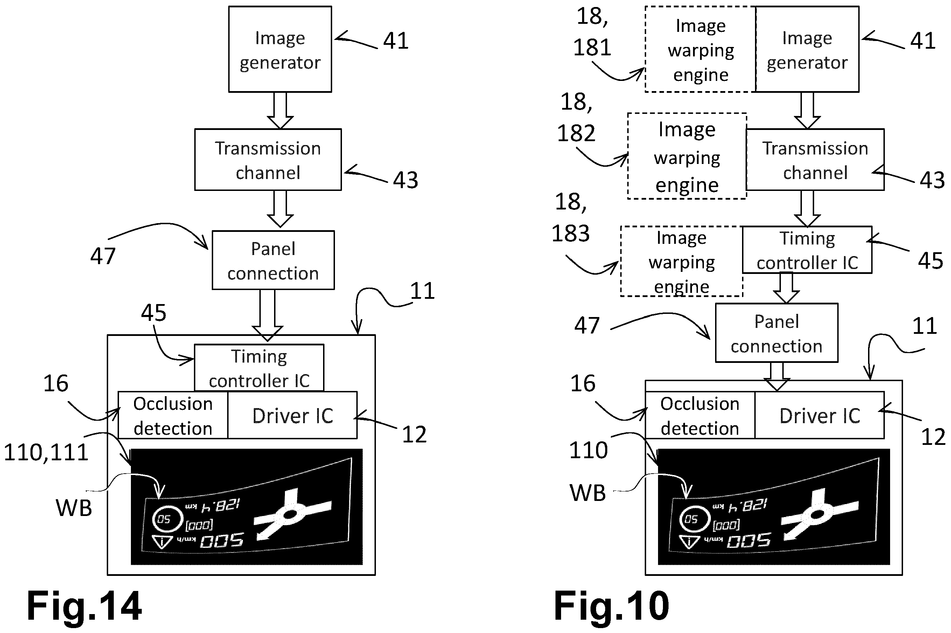

Fig.10 highlights several possible positions 181,182,183 for the image warping engine 18. The image warping engine 18 takes the input image generated by the image generator 41 and applies some spatial transforms on it based on the optical transfer function of the individual HUD system.

As with the occlusion detection module 16, the image warping engine 18 is generally placed in locations 181,183 where some digital signal processing power is already present like in the image generator 41 or in the display timing controller 45. Another preferred location 182 is inside the transmission channel 43, with the same benefits as those discussed for the position of the occlusion detection function. The warped image WB is drawn on the display panel 11.

An important drawback of the state of the art systems is given by the image warping, in combination with the location of the occlusion detection module 16. That is, if the image warping engine 18 is placed in a location upstream (that is, closer to the image generator 41) to the occlusion detection module 16, the occlusion detection module 16 may generate false negatives.

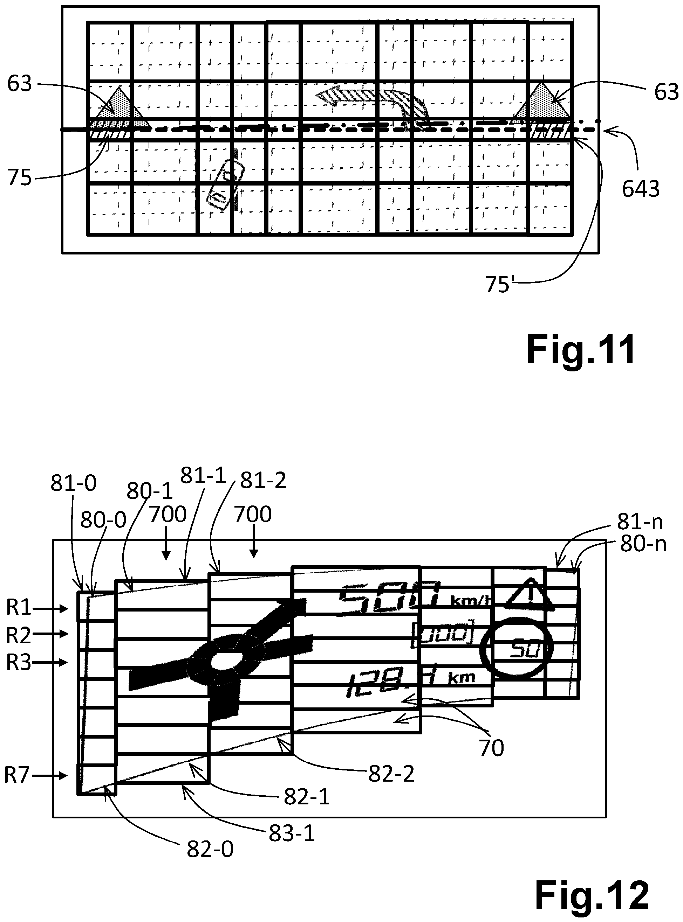

For instance, Fig. 11 depicts a situation where the occlusion detection module 16 gives a false negative result - it does not flag a region as potentially risky even if the object generated by the HUD system can occlude real-world objects.

For ease of comparison, the figure depicts the previously presented warped image WB over which are overlaid the virtual lines delimiting the same occlusion detection zones that were discussed earlier.

For the initial image BD, before any image warping was applied, the occlusion detection module 16 flagged two zones 75 as with a potential occlusion risk. These regions are filled with a slanted hash in both the original figure and this present figure. The risk was given by the two triangular objects 63 present in the original image that must be displayed by the HUD system. However, the analysis that was done previously did not considered the effects of image warping.

As seen in this figure, because of the optical distortions of the HUD system, the true horizon as seen by the end user 3 does not match with the initially selected reference line 643 of the display panel 11. Since the occlusion detection zones 70 are defined in a Manhattan-like fashion, they remain aligned with the depicted reference line 643 on the display panel 11 and hence, are not aligned anymore with the objects drawn on the display panel 11.

For this reason, the right-side occlusion detection zone 75' does not overlap anymore for a significant fraction of its area with the triangular shape from the original HUD system image. This effectively translates in a false positive response of the occlusion detection module 16 as the drawn object 63 still poses an occlusion risk for the end user 3.

The present invention provides solutions for the described drawback of the prior art, that is, the failure to properly monitor warped images needed for HUD systems.

As was already described, the position of the occlusion detection module 16 relative to the image warping engine 18 is important for the proper detection of the regions from the HUD generated image which may occlude real-world objects 61. It is clear that a position for the occlusion detection module 16 downstream of the image warping engine 18 needs to consider also the effect of the image warping on the HUD generated image.

As was already described, the image warping can change the relative positions of the HUD generated objects 63 to the typical Manhattan-like partitioning of the image into occlusion detection zones 70. Because of this, it is possible that occluding objects 63 are no longer detected by the occlusion detection module 16.

As stated, the image warping is necessary in order to compensate the distortions introduced by the optical system to the image generated by the HUD system. A similar approach can also be applied to the occlusion detection module 16, that is, because the image on which it must operate is (pre-)distorted, also the image partitioning used for the occlusion detection 16 can be changed to compensate the deformations introduced in the image. Fig. 12 depicts an implementation according to this approach.

Fig. 12 depicts a display panel 11 on which a warped HUD image WB is drawn. The drawn image is overlaid with lines delimiting several occlusion detection zones 70. It should be clear to anyone skilled in the art that the delimiting lines are not effectively drawn on the display panel 11 and that they are only shown as visual aids for the problem description.

As it can be seen from the figure, the partitioning of the warped image WB doesn't follow anymore a Manhattan pattern. The input image is no longer split into a regular pattern formed with continuous horizontal and vertical lines.

In the depiction, the image is partitioned in seven columns 700, with each column consisting of seven rows R1,...,R7. This results in a number of 49 occlusion detection zones 70. For the general case, if the image is partitioned in X columns 700, of Y rows Rn, the total number of occlusion detection zones 70 results as X by Y.

It should be clear that the same is true also for the Manhattan-like partitioning. However, for the description of a Manhattan pattern, one needs to specify only the horizontal and vertical coordinates of the partitioning vertical and, respectively, horizontal lines. It should be clear to anyone skilled in the art that the coordinates of the partitioning lines can be given using different formats, for instance one may specify the absolute coordinate of the first line, with the rest of the lines being specified relative to adjacent ones. For example, if one specifies the horizontal coordinate of the first (e.g. leftmost) vertical line and the width of the first column 700 of occlusion detection zones 70, the second partitioning line will have the horizontal coordinate given by the coordinate of the first line summed with the width of the first column 700. Similarly, if a width for the second column 700-1 is specified, the coordinates of the third vertical partitioning line can be calculated by adding the computed coordinates of the second vertical line with the width of the second occlusion zones column.

In this way, the Manhattan pattern of X by Y zones can be specified using the horizontal coordinate of the first vertical line, the vertical coordinate of the first horizontal line and X widths for each of the X columns and Y heights for each of the Y rows. That is, even if the number of occlusion detection zones 70 is calculated as X by Y, the number of registers needed for the configuration of the pattern is given only by 2 + X + Y. For a pattern having X = 32 and Y = 16, a total of 512 detection zones 70 are created using only 50 registers.

By inspecting the previous figure, it can be seen that a configuration following the same algorithm for the case of warped images WB is no longer possible. For the partitioning scheme employed in Fig. 12, although one can still specify the horizontal coordinates of the first vertical line and the widths of each of the columns 700 of occlusion detection zones 70, it is no longer possible to specify in a similar fashion also the coordinates for the horizontal partitioning lines (which split each column 700 into individual rows Rn, and thus zones 70) as these horizontal portioning lines are no longer continuous. Since the scheme uses the same approach as for the simple Manhattan pattern for the specification of the columns of occlusion detection zones 70, the number of registers that are need follows the same rule - for X columns 700, one needs to specify the horizontal coordinate of the first vertical line and the widths of each of the X columns.

The simplest approach would be to specify for each of the columns 700 the needed positions or the heights of each of its constituent cells. With this, for each column having Y individual occlusion detection zones 70, the system would need to specify a total of Y cell heights plus 1 vertical coordinate of the top-most horizontal line. With this, the total number of registers needed for the configuration of such a partitioning scheme would be (X + 1) by (Y + 1). For the same case of X = 32 and Y = 16 it will be necessary to use a total of 561 registers, or 11 times more registers than were used for the simple Manhattan pattern.

While this may be feasible, it is desirable to have a simpler way of specifying the partitioning scheme in order to reduce the number of registers, and hence, the required size and cost of the resulting integrated circuit.

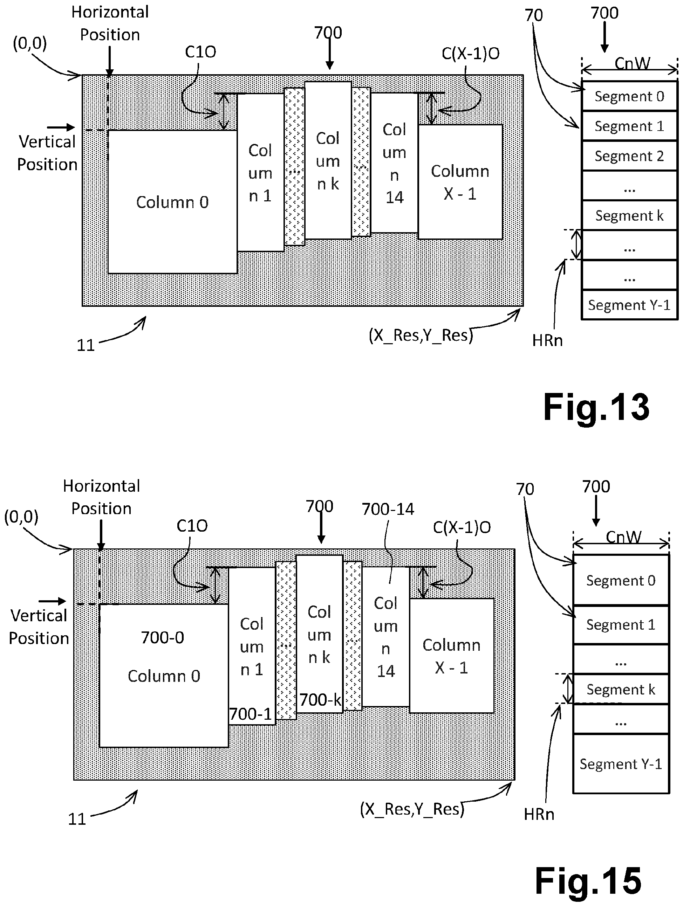

A better way (that is, with reduced number of registers) to configure the occlusion detection zones 70 needed for the analysis of the warped images WB is depicted in Fig.13.

As it can be seen, the specification of the image partitioning starts from the coordinates of the top-left corner of the first column 700 of occlusion detection zones (depicted as column 0 in the figure). For each of the columns 700, it must be specified the width of the column 700, as was already described previously. However, starting from the second column 700-1 (depicted as column 1), it has to be specified also the vertical offset C1O of that column. This vertical offset C1O is used to align the column 700 with the warped HUD image WB such that the occlusion detection zones 70 still capture the HUD generated virtual objects 63 in a precise fashion.

In addition to these, the system needs to know also the heights of the occlusion detection zones 70 (or segments, as named in the figure) from each of the columns 700. As a note, all zones 70 from the same column 700 will use the same height H in this embodiment. This means that in order to specify the heights for the zones from the X columns 700, one will need to specify also X occlusion zones height. In total, the configuration needs two position coordinates, X column widths, X - 1 column vertical offsets and X zone heights. In total, for a X by Y partitioning, the system needs 1 + X + X - 1 + X = 3X + 1 registers. For the same example of 32 by 16 zones, a total of 97 registers are required, significantly less than for the simplest approach.

Because of this, the depicted approach is the preferred approach for the partitioning scheme.

It should be clear to anyone skilled in the art that the depicted sizes and the number for the occlusion detection zones 70 is only for illustration purposes and do not bound in any way the actual implementation of an invention according to the present description. In fact, the number and / or the sizes of the occlusion detection zones 70 must be correlated to the actual use case of the HUD systems and actual implementations of the present invention may contain means to control these parameters. For instance, an embodiment of the present invention may contain also some registers that configure the number of actual columns 700 or actual segments / rows Rn in a column 700 that are to be used. These modifications of the system do not constitute sufficient grounds to consider such an implementation as a different invention.

In addition to this, it should be clear to anyone skilled in the art that also other variations in specifying the partitioning scheme are possible without departing from the present invention. For instance, instead of specifying a vertical displacement for each of the columns 700 starting with the second one, it is possible to specify the vertical coordinate of a reference point of the column 700, for instance, of the top-most edge of the column 700. It is also possible to specify the total height of a column 700 and, given the number of segments from the column, the system can calculate the height of a zone 70 / segment. All these variations lead to an implementation that is equivalent with the described one and cannot be considered departures from the present invention.

Since the occlusion detection module 16 can be placed after the image warping engine 18 operates on the image that is to be displayed by the HUD system, the occlusion detection module 16 considers the image pre-distortion that is applied to the video data, needed for the compensation of the optical distortions introduced by the optical path from the HUD system's display panel 11 to the end-users' 3 eyes. This allows for the correct detection of the occlusion risks, even if the image that is analyzed is deformed due to the image warping. This does not happen in state of the art HUD systems in which the occlusion detection module 16 is not tuned to operate on warped images WB. If such a system is fed with an image that is warped upstream of its position, the module may fail to properly signal possible occlusions.

The invention may also be applied to near-eye displays, augmented reality head-sets, and head-up applications in non-automotive fields.

Fig. 14 depicts a preferred embodiment of the present invention. Both, the occlusion detection module 16 and the timing controller 45 are positioned on the display panel 11.

In the preferred embodiment, the image WB is partitioned into several occlusion detection columns 700, each column being further divided into a number of occlusion detection zones 70 (or segments, as depicted in Fig. 13).

The positions of the occlusion detection columns 700 are specified based on a fixed reference point defined by the top-left corner of the first occlusion detection column 700, the horizontal sizes CnW of each of the occlusion detection columns 700 and the vertical offsets CnO associated to each of the columns 700, starting from the second one.

Each of the occlusion detection columns 700 is further divided into a fixed number of segments or occlusion detection zones 70. For each column 700, the system needs the specification of the height of an individual segment or zone 70. In this way, columns 700 at different positions can have different total heights, even if all columns have the same number of segments or rows Rn or zones 70 and thus, it is possible to adjust the height of the occlusion detection region to the warped image WB needed by the HUD system. The total height of a given occlusion detection column 700 can be computed considering the height of an individual zone 70 from that column 700, coupled to the number of zones contained in that column 700. For applications that want to have different sensitivities for the occlusion detection, based on the position of the occluding object into the field of view, the proposed partitioning may not appear optimal. As already described, objects generated by the HUD system that appear close to the horizon line 642 for the end user 3 may be more critical and for this reason, the occlusion detection zones 72 which correspond to regions that appear close to the horizon 642 may need to detect objects covering a smaller area when compared to regions with zones 71,73 that fall above or below the horizon 642. In the proposed scheme this may be achieved by having different detection thresholds THR(z) for different zones 70. In this way, zones 72 required to detect objects having a smaller area (that is, the zones are in regions appearing closer to the horizon 642) will have a lower relative threshold THR(z) and thus can be flagged as risky if smaller objects are present in them when compared to zones 71,73 in other regions.

A possibility is to have individual detection thresholds THR(z) for each of the occlusion detection zones 70. For an X by Y partitioning, this approach requires the presence of X by Y thresholds THR(z).

Another possible implementation is to assign a same relative threshold THR(Rn) for a same row Rn from different columns 700. That is, segment 0 or row R0 of all columns 700 will have a certain same threshold THR(R0), segment 1 or row R1 from all columns 700 will have another certain threshold THR(R1), and so on. With this scheme, for a partitioning into X by Y zones, only a total of Y thresholds THR(Rn) are needed.

Finally, another possibility is to have a limited set of thresholds THR(n), for instance a set consisting of three classes - a class for regions with zones 71 that fall above the horizon 642, a class for regions with zones 72 close to the horizon 642 and another class for regions with zones 73 below the horizon 642. It should be clear to anyone skilled in the art that other variations are possible for the allocation of detection threshold THR(n) without departing from the ideas contained in the present invention.

In another possible embodiment, the position of the occlusion detection module 16 remains the same but the image portioning scheme is slightly altered. As described for the first embodiment, the height of all rows Rn or segments (occlusion detection zones 70) from one column 700 are all the same. This may not be preferred in applications that want to have different sensitivities for the occlusion detection, based on the position of the occluding object into the field of view, even if, as already stated, there are means to achieve the varying sensitivity by adjusting the detection thresholds THR(n).

As already described, objects generated by the HUD system that appear close to the horizon 642 line for the end user 3 may be more critical and for this reason, the occlusion detection zones 72 which correspond to regions that appear close to the horizon 642 may need to have a smaller surface. This translates into a lower height for the zones 72 in a region close to the horizon 642 when compared to zones 74,73 in regions that fall above or below the horizon 642.

This may seem that one would need to specify the size of each occlusion detection zone 70, however, it is possible to implement a better setup. As depicted in Fig.15, the image is still partitioned into several occlusion detection columns 700, but the columns 700 are not partitioned anymore into segments or zones 70 that have equal heights.

The first column 700-0 (numbered as Column 0 in the depiction) is considered the reference column for which the system needs to have specified the sizes of each its individual segments or rows Rn. This means that a total of Y registers is needed for the specification of the heights HRn of the segments or rows Rn. The rest of the columns 700-1,...700-(X-1) are configured using a scaling factor SF based of the first reference column 700-0. For instance, if the second column 700-1 (numbered as Column 1 in the figure) needs to be slightly higher when compared to the first column 700-0, the system will be configured with a scaling factor SF1 slightly higher than unity for this column. The occlusion detection module 16 will then use the heights HRn of the individual segments or rows Rn from the first column 700-0 and the scaling factor SF1 to compute the needed heights for the segments or rows Rn of the second column 700-1. For instance, if the scaling factor for the second column is SF1=1.1, this means that the total height of the second column 700-1 needs to be 10% higher than that of the first column 700-0. This also means that each individual segment or row Rn of the second column 700-1 must be 10% taller than the corresponding segments or rows Rn of the first column 700-0. The system will multiply the heights HRn of the individual segments or rows Rn of the first column 700-0 with this scaling factor SF1 in order to compute the heights of the segments or rows Rn from the second column 700-0. For each of the columns 700-n starting with the second column 700-1, the system needs to know the scaling factor SFn, resulting that X - 1 registers are needed if X columns 700-n are present in the partitioning scheme. In total, a system having X by Y occlusion detection zones 70 needs two registers to specify the coordinates of the first column, X registers to specify the widths of the columns 700-n, X- 1 registers to specify the vertical offsets CnO of the columns, Y registers to specify the individual heights HRn of the segments of the first column 700-0 and X - 1 registers to specify the scaling factors SFn for the subsequent occlusion detection columns 700-1,...,700-(X-1). For the same example of X = 32 and Y = 16, a total of 112 registers are needed for the proper setup of the occlusion detection zones 70. It is clear that a higher number of registers is needed when compared to the preferred embodiment. Depending on the final implementation, this may be offset by the number of threshold registers that are needed, but this is not mandatory as also in this case it is possible to have a separate detection threshold THR(n) for each individual occlusion detection zone 70.

A slight disadvantage of this implementation when compared to the preferred embodiment is the increased complexity of the system for the determination of the heights HRn of the segments or rows starting with the second column 700-1. In fact, the added circuit complexity may completely offset the complexity of having individual detection thresholds THZR(n) for each occlusion detection zone 70 as multipliers are needed for the computation based on the scaling factor SFn.

It should be clear to anyone skilled in the art that other ways to specify the relative sizes for the columns 700-n are possible, for instance, the system may use instead of the scaling factor SFn the value of the total height of the column 700-n or of a specific segment or row Rn from the region. With this, the system will determine by itself the scaling factor SFn as the ratio between the height specified for the column 700-n and the height specified for the first column 700-0.

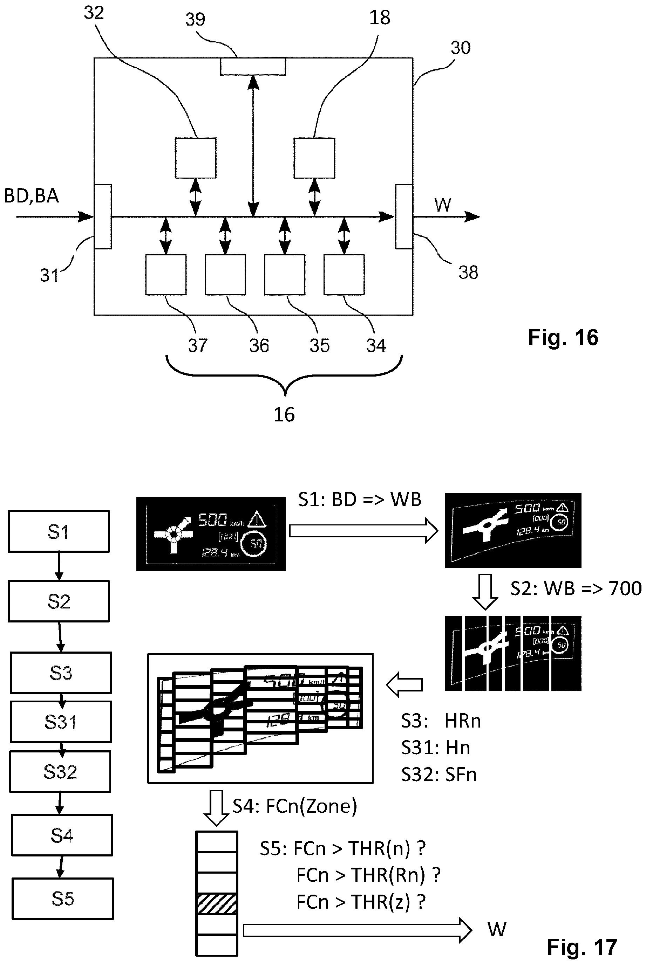

Fig. 16 depicts an apparatus 30 for reducing occlusions by objects 63 of a virtual image VB of a head-up display of a vehicle according to the invention. The apparatus 30 comprises an input 31 for receiving e.g. an image BD,BA to be displayed. The apparatus 30 comprises further a control module 32 and an image warping engine 18 for warping an image BD, BA to be displayed into a warped image WB. The apparatus further comprises an occlusion detection module 16 having a dividing module 34, for vertically dividing said warped image WB to be displayed in multiple columns 700-x having zones 70,71,72,73, wherein these zones have rectangular shape, and are arranged in rows Rn and columns 700-x. The occlusion detection module 16 further has an adapting module 34, for adapting each column 700-x of zones 70,71,72,73 such that the zone 72 of the respective centre row of each column 700-x substantially coincides with a horizontal reference line 647 of the warped image (WB) to be displayed. The occlusion detection module 16 further has a detecting module 32, for detecting a fraction FC of each zone 70,71,72,73 that is covered by objects 63 of the warped image WB to be displayed. The occlusion detection module 16 further has a warning module 37 for generating and outputting a warning signal W in case that at least one of said zones70,71,72,73 is a risk zone 75 for which the detected fraction FC exceeds a threshold THR(x). The warning signal W is for example output via an output 38.

The image warping engine 18, the dividing module 34, the adapting module 35, the detecting module 36, and the warning module 37 may be controlled by the control module 32. A user interface 39 may be provided for enabling a user 3 or a service technician to modify settings of the elements 18, 34, 35, 36 and 37. These elements 18, 34, 35, 36 and 37 can be embodied as dedicated hardware units. Of course, they may likewise be fully or partially combined into a single unit or implemented as software running on a processor, e.g. a CPU or a GPU.

Fig. 17 depicts a method for reducing occlusions by objects 63 of a virtual image VB of a head-up display of a vehicle according to the invention. The method comprises:
- Warping S1 an image BD,BA to be displayed.
- Vertical Dividing S2 the image BD,BA to be displayed into columns 700,700-n.
- Adapting S3 each column 700,700-n of zones 70,71,72,73 such that the zone 72 of a respective centre row of each column 700,700-n substantially coincides with a horizontal centre line 647 of the warped image WB to be displayed. The zones 70,71,72,73 thus have rectangular shape, and are arranged in rows Rn and columns 700,700-n.
- Detecting S4 a fraction FC of each zone 70,71,72,73 that is covered by objects 63 of the image WB to be displayed;
- Gernerating and outputting S5 of a warning signal W in case that at least for one of said zones 70,71,72,73 the detected fraction FC exceeds a threshold THR(n).

Adapting S3 comprises according to a preferred embodiment Adjusting S31 the height Hn of a column 700-n. Looking at Fig. 12 this is done by shifting the upper border 81-n of each column 700-n such that it coincides with the uppermost element of the upper border part 80-n of the warped image WB falling in said column 700-n. Likewise, the lower border 83-n of each column 700-n is shifted vertically such that it coincides with the lowermost element of the lower border part 82-n of the warped image WB falling in said column 700-n.

Adapting S3 comprises according to a preferred embodiment Scaling S32 the height HRn of the rows Rn of a column 700-x using scaling factors SFn. Looking at the right part of Fig. 15 it can be seen that segments or rows Rn of a single column 700 have different heights HRn. Different columns 700-n have different total heights Hn. The total heights Hn are scaled to the first column's height H0 by scaling factors SFn. Similarly, the height of a certain row Rn of a certain column 700-x is derived from the height HRn of the respective row Rn of the first column 700-0 by applying the scale factor SFx for column 700-x. In another embodiment, different scaling factors SFn for different rows Rn of a column 700-x are used, applying these on the total height Hx of said column 700-x.

According to other embodiments Warning S5 comprises applying row specific thresholds THR(Rn) or even zone specific thresholds THR(z).

## Claims

1. Method for reducing occlusions by objects (63) of a virtual image (VB) of a head-up display of a vehicle comprising:
- Dividing an image (BD,BA) to be displayed in multiple zones (70,71,72,73), wherein these zones (70,71,72,73)
- have rectangular shape,
- are arranged in rows (Rn) and columns (700,700-n), and
wherein a centre row of said rows (Rn) substantially coincides with a horizontal reference line (642);
- Detecting (S4) a fraction (FC) of each zone (70,71,72,73) that is covered by objects (63) of the image (BD,BA) to be displayed;
- Warning (S5) by generating and outputting of a warning signal () in case that at least for one of said zones (70,71,72,73) the detected fraction (FC) exceeds a threshold (THR(n));
- preceding the Dividing performing Warping (S1) the image (BD,BA) to be displayed; and
the Dividing comprising
- Vertical Dividing (S2) the image (BD,BA) to be displayed into columns (700,700-n), and
- Adapting (S3) each column (700,700-n) of zones (70,71,72,73) such that the zone (72) of the respective centre row of each column (700,700-n) substantially coincides with a horizontal centre line (647) of the warped image (WB) to be displayed.

2. Method according to claim 1, wherein Adapting (S3) comprises
- Adjusting (S31) the height (Hn) of a column (700-n)
- such that the upper border (81-n) of said column (700-n) coincides with the uppermost border part (80-n) of the warped image (WB) falling in said column (700-n), and
- such that the lower border (83-n) of said column (700-n) coincides with the lowermost border part (82-n) of the warped image (WB) falling in said column (700-n).

3. Method according to anyone of the preceding claims, wherein Adapting (S3) comprises
- Scaling (S32) the height (HRn) of the rows (Rn) of a column (700-x).

4. Method according to claim 3, wherein Scaling (S32) comprises using different scaling factors (SFn) for different rows (Rn) of a column (700-x).

5. Method according to anyone of the preceding claims, wherein Warning (S5) comprises applying row specific thresholds (THR(Rn)).

6. Method according to anyone of the preceding claims 1-4, wherein Warning (S5) comprises applying zone specific thresholds (THR(z)).

7. Computer program code comprising instructions, which, when executed by at least one processor, cause the at least one processor to perform a method according to any of claims 1 to 6 for reducing occlusions by objects (63) of a virtual image (VB) of a head-up display of a vehicle.

8. Apparatus for reducing occlusions by objects (63) of a virtual image (VB) of a head-up display of a vehicle, the apparatus comprising
- an image generator (41),
- an image warping engine (18) for warping an image (BD,BA) to be displayed,
- a dividing module (34), for vertically dividing said warped image (WB) to be displayed in multiple columns (700-x) having zones (70,71,72,73), wherein these zones
- have rectangular shape, and
- are arranged in rows (Rn) and columns (700-x);
- an adapting module (35), for adapting each column (700-x) of zones (70,71,72,73) such that the zone (72) of the respective centre row of each column (700-x) coincides with a horizontal reference line (647) of the warped image (WB) to be displayed,
- a detecting module (36), for detecting a fraction (FC) of each zone (70,71,72,73) that is covered by objects (63) of the warped image (WB) to be displayed, and
- a warning module (37) for generating and outputting of a warning signal in case that at least for one of said zones (75) the detected fraction (FC) exceeds a threshold (THR(x)).

9. Head-up display having a display apparatus (1) with
- a picture generating unit (10) with a display panel (11) for displaying an image and a driver (12) for the display panel (11),
- an optical unit (14) for projecting the image onto a projection surface (2,20),
- an image generator (41) for generating an image (BD) to be displayed, and
- an apparatus for reducing occlusions according to claim 8.
